# FASCICULE DE BREVET EUROPEEN

(11) **EP 1 216 329 B1**
(45) Date de publication et mention de la délivrance du brevet: **30.06.2004**
(21) Numéro de dépôt: 99946249.2
(22) Date de dépôt: 28.09.1999
(51) Int. Cl.: E02D 17/00, E02D 27/26, C04B 18/04

(54) **PROCEDE DE TRAITEMENT DE DEBLAIS, INSTALLATION POUR SA MISE EN OEUVRE ET REMBLAI OBTENU**
VERFAHREN UND VORRICHTUNG ZUR BEHANDLUNG VON BODENAUSHUB UND ERHALTENE AUFSCHÜTTUNG
METHOD FOR TREATING EARTH SPOIL, INSTALLATION FOR IMPLEMENTING SAID METHOD AND RESULTING FILLING MATERIAL

(43) Date de publication de la demande: 26.06.2002
(73) Titulaire: GAZ DE FRANCE, 75017 Paris (FR); ELECTRICITE DE FRANCE-SERVICE NATIONAL, 75008 Paris (FR)
(72) Inventeur: LATTEUX, Luc, F-59930 La Chapelle d'Armentieres (FR)
(74) Mandataire: Gutmann, Ernest
(86) Numéro de dépôt international: PCT/FR1999/002301
(87) Numéro de publication internationale: WO 2001/023675

(56) Documents cités:
- FR-A- 2 413 959
- FR-A- 2 484 664
- FR-A- 2 729 685
- FR-A- 2 777 305
- HANISCH J ET AL: "ZU AUFBEREITUNGSTECHNISCHEN ASPEKTEN DES BAUSTOFF-RECYCLINGS" AUFBEREITUNGS TECHNIK,DE,VERLAG FUER AUFBEREITUNG SCHIRMER UND ZEH. WIESBADEN, vol. 32, no. 1, 1 janvier 1991 (1991-01-01), pages 10-17, XP000173556 ISSN: 1443-9302 cité dans la demande

## Description

L'invention concerne un procédé de traitement de déblais pour en faire du remblai, une installation de mise en oeuvre, ainsi que du remblai obtenu par ce procédé et présentant une capacité de densification et une sensibilité à l'eau prédéterminées.

Dans le domaine des travaux publics, où il y a lieu de creuser des tranchées pour y faire passer des câbles, canalisations, et ce notamment sous ou le long des chaussées et trottoirs, les déblais de creusement de ces tranchées sont très importants et leur réutilisation, pour en faire du remblai, présente de nombreux avantages. Le traitement de déblais pour en faire du remblai pour tranchées a donc pris une importance primordiale pour des raisons liées à l'environnement et à la nécessité de réduire, d'une part la décharge de déblais, et d'autre part la consommation des remblais naturels, par exemple des remblais provenant de carrières.

Du point de vue du comblement des tranchées, le choix des matériaux utilisables et leurs caractéristiques doivent répondre à un cahier des charges précis du point de vue du respect de l'environnement, des propriétés mécaniques, physiques et chimiques du remblai, et ces contraintes dépendent de l'utilisation qui en est faite selon les tranchées et à l'intérieur même d'une tranchée.

Ainsi, pour son utilisation à titre de remblai de chaussée, par exemple, le cahier des charges impose notamment les caractéristiques suivantes au remblai employé :
- une capacité de densification Q3-Q4, telle que définie par la norme NF 11300,
- une sensibilité à l'eau définie par les valeurs IPI et ICBR, le rapport ICBR/IPI étant supérieur à 1 et l'indice IPI supérieur à 15,
et ce quelle que soit la granulométrie.

Les valeurs IPI et ICBR sont définies aux normes NFP 94 093 et 94 078. Les remblais et leurs caractéristiques selon leur emploi sont définies par la norme NFP 98 331.

D'autres critères de conformité peuvent en outre être pris en compte, selon que l'emploi prévu du remblai (pour la partie inférieure du remblai ou la partie supérieure du remblai, par exemple), selon la nature de la tranchée, de ce qui s'y trouve, et selon les contraintes liées à l'environnement.

La granulométrie quant à elle peut être prédéterminée par l'usage qui va être fait du remblai dans la tranchée. En zone de pose, on utilise en général une granulométrie de 0/6 mm à 80 % de 0/4 mm, et environ 70 % de 0/2 mm, pour des raisons de non-agressivité vis-à-vis de ce que l'on pose (canalisations, câbles,...), et au-dessus, pour les parties inférieures et supérieures de remblai, des normes moins contraignantes. Ainsi, en général, on utilise pour les parties inférieures et supérieures du matériau dont la granulométrie ne dépasse par le tiers de la largeur de la tranchée. Par exemple, pour combler une tranchée de 40 cm, pour les parties inférieures et supérieures de remblai, on utilisera un matériau de granulométrie inférieure à 133 mm.

De façon générale, la granulométrie d'un remblai est comprise entre 0/6 et 0/50.

Il est connu du document FR-A-2 729 685 de traiter du matériau de déblais pour les rendre utilisables comme matériau de remblai. Toutefois, le matériau obtenu reste sensible à l'eau, avec une valeur IPI inférieure à 15 et un rapport ICBR/IPI inférieur à 1, si bien que le matériau obtenu selon ce procédé est inutilisable en partie supérieure de remblai ou en partie inférieure de remblai, parties qui sont majoritaires en général, en quantité, lorsque l'on comble une tranchée. De plus, ce procédé ne permet de traiter qu'une gamme limitée de déblais, et en particulier pas des déblais argileux.

La présente invention a pour objet un nouveau traitement de déblais dans une gamme plus étendue (argilosité et teneur en eau plus élevées), pour en faire du remblai qui répond notamment aux critères définis ci-dessus.

Ainsi, la présente invention concerne un procédé de traitement de déblais pour en faire du remblai, dans lequel les déblais à traiter subissent un concassage, suivi d'un criblage, le concassage et le criblage étant en boucle, et on additionne de la chaux aux déblais entrants, et on récupère du remblai conforme.

Un autre objet de l'invention est de fournir un tel procédé de traitement de déblais pour en faire du remblai, dans lequel les déblais à traiter sont additionnés avec de la chaux en amont d'un concassage et subissent le concassage et un criblage en boucle, le résidu du criblage étant recyclé en amont du concassage, et on récupère du remblai conforme.

Un autre objet de l'invention est de fournir un tel procédé de traitement de déblais pour en faire du remblai, dans lequel les déblais à traiter sont additionnés avec de la chaux en amont d'un concassage primaire et subissent le concassage primaire, puis un criblage, le résidu du criblage étant recyclé en amont du criblage en subissant un concassage secondaire, et on récupère du remblai conforme.

Un autre objet de l'invention est de fournir une installation pour la mise en oeuvre d'un procédé de traitement de déblais pour en faire du remblai conforme. Une telle installation comporte un concasseur, un crible, des moyens de transport des déblais de leur source au concasseur, des moyens de transport des déblais concassés du concasseur au crible, des moyens de transport du résidu du crible vers le concasseur, des moyens de distribution de chaux dans les déblais, disposés au niveau des moyens de transport des déblais de leur source au concasseur ou au niveau du concasseur, à l'exception de moyens de scalpage des déblais et de malaxage du remblai.

Un autre objet de l'invention est de fournir une telle installation, c'est-à-dire sans moyens de scalpage ni moyens de malaxage, permettant de traiter des déblais pour en faire du remblai conforme, installation qui comporte un concasseur, un crible, des moyens de transport des déblais de leur source au concasseur, des moyens de transport des déblais concassés du concasseur au crible, des moyens de transport du résidu du crible en amont du concasseur, et des moyens de distribution de chaux dans les déblais au niveau des moyens de transport des déblais de leur source au concasseur ou au niveau du concasseur.

Un autre objet de l'invention est de fournir une telle installation, c'est-à-dire sans scalpeur ni malaxeur, permettant de traiter des déblais pour en faire du remblai conforme, installation qui comporte un concasseur primaire, un crible, un concasseur secondaire, des moyens de transport des déblais de leur source au concasseur primaire, des moyens de transport des déblais concassés du concasseur primaire au crible, des moyens de transport du résidu du crible au concasseur secondaire, des moyens de transport du déblai du concasseur secondaire en amont du crible, et des moyens de distribution de chaux dans les déblais au niveau des moyens de transport des déblais de leur source au concasseur primaire.

Comme on le verra plus loin, les installations peuvent bien entendu comporter d'autres dispositifs usuels dans le domaine du traitement de déblais et de remblai.

Pour la mise en oeuvre de ce procédé, les déblais ne font toutefois pas l'objet de ce que l'on appelle un scalpage au sens de la présente demande, c'est-à-dire un tri sélectif tendant à séparer les matériaux de granulométrie supérieure à 60 mm ou à 40 mm des autres matériaux. Un tel tri sélectif peut également être réalisé par un cribleur ou godet-cribleur. C'est pourquoi les installations de l'invention ne comportent pas de moyens de scalpage des déblais ni de cribleur. L'absence de scalpage est un avantage par rapport aux techniques usuelles.

Par ailleurs, le procédé est mis en oeuvre sans étape propre de malaxage. Dans les techniques usuelles de traitement de remblai naturel, il est connu de traiter à la chaux, en fin de chaîne, ce qui nécessite un malaxage du remblai avec la chaux. Dans ces procédés, un malaxeur est nécessaire en bout de traitement, car le malaxeur ne pourrait malaxer le remblai naturel en début de traitement, avant concassage. Dans le procédé de l'invention, le concasseur réalise également le malaxage.

Par déblai selon l'invention, on entend un mélange de matériaux divers, tels qu'argile, limon, éléments solides ou graves, ou matériaux de granulométrie supérieure à 60 mm comme des briques, des pavés, du béton léger de fondation de chaussée, des agglomérats, des silex, de l'enrobé, bordures de trottoirs, et de façon générale ce que l'on extrait des sols et chaussées lorsque l'on creuse une tranchée.

Un autre objet de l'invention est de fournir du remblai conforme, c'est-à-dire répondant aux critères liés à l'utilisation en tranchée, une capacité de densification Q3-Q4, telle que définie par la norme NF 11300, une sensibilité à l'eau définie par les valeurs IPI et ICBR, le rapport ICBR/IPI étant supérieur à 1 et l'indice IPI supérieur à 15, et une granulométrie prédéterminée.

Pour la zone de pose, comme on a vu plus haut, une granulométrie de 0/6 mm à 80 % de 0/4 mm et environ 70 % de 0/2 mm peut être requise.

Ainsi, dans certaines zones de pose ou selon certaines contraintes liées à l'usage des tranchées, il peut être nécessaire de disposer de remblai non agressif (de par la granulométrie), présentant un pH inférieur à 10, une résistivité électrique supérieure à 1000 Ωcm (norme AFNOR 05-252), ce qui est possible en mettant en oeuvre l'invention.

Une résistivité thermique et une perméabilité au gaz déterminées peuvent également être requises.

La chaux introduite dans les déblais entrants est utilisée à hauteur de 0.1 à 10 % en poids des déblais, de préférence 0.8 à 3 %. De façon préférée, on utilise environ 1 % de chaux. La quantité de cet additif dépend bien entendu de la qualité des déblais traités et des qualités requises pour le remblai.

Comme chaux, on peut utiliser de la chaux du type utilisé dans les travaux publics, et notamment de la chaux dite "fine". Une granulométrie de l'ordre d'environ 0,1 à 10 mm, de préférence environ 0,2 mm, est choisie.

D'autres détails et avantages de l'invention seront mieux compris à l'aide de la description détaillée ci-dessous, et des exemples illustratifs qui suivent. Il est dans la suite fait référence aux dessins annexés suivants :
La Figure 1 montre de façon schématisée une installation de traitement des déblais permettant de mettre en oeuvre le procédé de l'invention.
La Figure 2 montre de façon schématisée une autre installation de traitement des déblais permettant de mettre en oeuvre une variante du procédé de l'invention.

Au sens de l'invention, on entend par concassage et criblage les étapes usuelles des traitements que subissent des matériaux de récupération pour tenter d'en faire du remblai. Ces procédés sont mis en oeuvre dans des concasseurs et cribleurs usuels, tels qu'ils sont décrits dans le document "Aspects of processing techniques for recycling of building materials" Aufbereitungs-Technick, 32 (1991), Januar N° 1, Wiesbaden. Ainsi, comme concasseur, il est connu d'utiliser des broyeurs à sable, à percussion, à cône et à boulets. Quand un seul concasseur est utilisé, ou à titre de concasseur primaire, on utilise de préférence un concasseur à percussion.

Les cribles sont choisis, de manière usuelle, de façon à obtenir la granulométrie prédéterminée désirée. Un crible à 6,3 est ainsi utilisable, pour préparer du remblai de zone de pose. On indique ici la taille de la dernière des grilles du crible ; les cribles sont en effet en général prévus avec plusieurs étages de criblage, à taille de grille décroissante en descendant.

Au sens de l'invention, le résidu de criblage ou du crible est la partie du flux entrant dans le crible qui ne le traverse pas parce que les morceaux sont trop gros, et en est déchargé. Il doit être de ce fait de nouveau concassé, ce qui est réalisé par passage dans la boucle concassage-criblage. L'autre partie du flux entrant et qui passe le crible constitue du remblai conforme.

Par ailleurs, les moyens de convoyage, de transport et d'alimentation sont usuels dans ce genre d'installations. Il s'agit notamment de bandes convoyeuses, d'alimentateurs à bandes, de tapis roulants, ou de façon générale de convoyeurs, et de trémies doseuses.

Au sens de l'invention, le déblai conforme est prêt à l'emploi ; sa teneur en eau peut toutefois être ajustée, par exemple par arrosage.

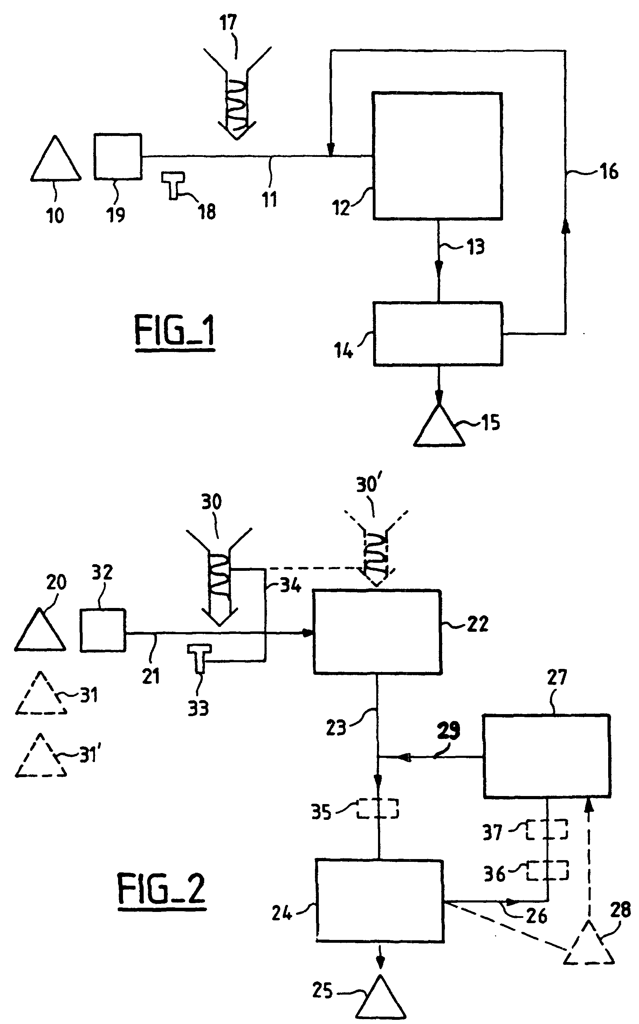

Une première variante du procédé de l'invention apparaît à la Figure 1. Les déblais à traiter provenant de la source 10 sont, à partir d'une trémie d'alimentation 19, convoyés par une bande convoyeuse 11 vers un concasseur 12. Le concasseur 12 est relié par une bande convoyeuse 13 à un crible 14 qui décharge, d'une part du remblai conforme 15 et d'autre part, du résidu de criblage qui est convoyé par un convoyeur 16 en amont du concasseur 12.

Les moyens de distribution de la chaux sont constitués par une vis doseuse 17 qui décharge de façon contrôlée de la chaux dans les déblais à traiter 10 pendant le convoyage sur la bande 11.

A cet effet, la bande 11 peut être équipée de moyens de pesage 18 qui, reliés à la vis 17 permettent de réaliser l'addition contrôlée de la quantité de chaux, par asservissement.

A la Figure 2 est représentée une seconde variante du procédé mis en oeuvre dans une installation conforme à l'invention. Les déblais à traiter 20 sont, à partir d'une trémie d'alimentation 32, convoyés sur un convoyeur 21 vers un concasseur primaire 22. Le convoyeur 21 est équipé d'une vis doseuse 30 déchargeant de la chaux de manière contrôlée dans les déblais qui sont alors traités dans le concasseur primaire 22. Le déblai concassé est alors convoyé par une bande 23 vers un crible 24 qui décharge, d'une part du remblai conforme 25, et d'autre part un résidu de criblage qui est convoyé par une bande 26 vers un concasseur secondaire 27, le produit du concassage par le concasseur secondaire 27 étant convoyé par une bande 29 en amont du crible 24.

Un moyen de pesage 33 est installé sous le convoyeur 21, et de façon connue en soi, permet d'asservir le dosage par la vis 30, en lui étant reliée par les moyens d'asservissement 34.

De plus, si le broyeur secondaire 27 est à cône, on peut prévoir un testeur 37 qui permet de l'arrêter au cas où du métal se présenterait sur la bande 26. Le testeur 37 est optionnel et représenté en pointillés à la Figure 2.

Enfin, il peut être prévu, de façon optionnelle et préférentielle, un déferrailleur 35, qui est disposé avant le crible 24 sur la bande 23. Il peut également être prévu une trémie-tampon 36 qui permet de réguler l'alimentation du broyeur secondaire 27 en résidu de crible. On peut aussi prévoir un stockage intermédiaire 28 du résidu de crible. Selon les caractéristiques des déblais à traiter, on peut, au lieu de traiter immédiatement les déblais, cumuler les déblais provenant de différents chantiers pour obtenir, par dosage des compositions des déblais de diverses origines, des compositions de remblai plus homogènes. On peut ainsi prévoir des sources 31,31' de déblais de provenances diverses.

Dans une variante de ce second procédé, la vis doseuse 30' est installée de façon à délivrer la chaux au niveau du concasseur 22 plutôt qu'au niveau du convoyeur 21. De même, dans la variante de la figure 1, on pourrait déplacer la vis doseuse 17 de façon à ce que la chaux soit additionnée aux déblais dans le concasseur. On pourrait aussi prévoir deux vis doseuses.

Ces variantes sont représentées à la Figure 2 en pointillés pour les déblais à traiter 31,31' et pour les stockages temporaires de résidus de criblage 28, le déferrailleur 35, la trémie-tampon 36, et la vis doseuse 30'.

Dans une variante, le crible peut être équipé de moyens anti-colmatage. De même, l'entrée et la sortie des concasseurs peuvent être équipées de canons à air.

Ces installations peuvent de plus être prévues fixes sur un chantier, ou mobiles, pour être déplacées dans le chantier ou vers d'autres chantiers.

### RESULTATS

En utilisant l'installation de la variante de la Figure 1 avec un concasseur à percussion de 1 m de large et dont le diamètre du rotor vaut 1 m, on peut obtenir 40 t/h de remblai conforme. En utilisant celle de la variante de la Figure 2, on augmente considérablement le débit, et l'on obtient jusqu'à 70 t/h.

Dans les deux cas, on utilise un crible à 6,3 pour obtenir une granulométrie de 0/4 mm. On obtient en fin de cycle un taux de fine variant de 20 à 30%, une teneur en eau de 10 à 16 %, en employant 1 % en poids de chaux par rapport aux déblais secs.

A titre comparatif, un équipement tel que décrit à la Figure 2, sans adjonction de chaux, permet d'obtenir un remblai de type b5, mais celui-ci ne répond pas au critère de sensibilité à l'eau qui est rempli si le taux de fine est inférieur ou égal à 12 % en poids, la Vbs < 0,2. Or, un tel remblai de type b5 ne peut pas être utilisé en Q3.

En revanche, en traitant avec 1 % de chaux, par un effet de floculation, les mêmes déblais traités selon l'invention sont utilisables en tant que remblai en classe Q3 (norme NF 11.300).

## Revendications

1. Procédé de traitement de déblais pour en faire du remblai, **caractérisé en ce que** les déblais à traiter subissent un concassage, suivi d'un criblage, le concassage et le criblage étant en boucle, et **en ce que** l'on additionne de la chaux aux déblais entrants, et on récupère du remblai.

2. Procédé selon la revendication 1, **caractérisé en ce que** le déblai entrant est non scalpé.

3. Procédé selon la revendication 1 ou 2, **caractérisé en ce que** les déblais à traiter subissent un concassage et un criblage en boucle, le résidu du criblage étant recyclé en amont du concassage.

4. Procédé selon la revendication 1 ou 2, **caractérisé en ce que** les déblais à traiter subissent un concassage primaire, puis un criblage, le résidu du criblage étant recyclé en amont du criblage en subissant un concassage secondaire.

5. Procédé selon l'une des revendications 1, 2 ou 3, **caractérisé en ce que** la chaux est introduite en amont du concassage ou pendant le concassage.

6. Procédé selon l'une des revendications 1, 2 ou 4, **caractérisé en ce que** la chaux est introduite en amont du concassage primaire ou pendant le concassage primaire.

7. Procédé selon l'une des revendications 1 à 6, **caractérisé en ce que** l'on additionne de 0,1 à 10 % en poids de chaux par rapport aux déblais, de préférence 0,8 à 3 % en poids de chaux par rapport aux déblais.

8. Installation de traitement de déblais pour en faire du remblai à partir d'une source de déblais comportant au moins :
- un concasseur,
- un crible,
- des moyens de transport des déblais de la source au concasseur,
- des moyens de transport des déblais concassés du concasseur au crible,
- des moyens de transport du résidu du crible vers le concasseur,
- des moyens de distribution (17,30,30') de chaux dans les déblais, disposés au niveau des moyens de transport des déblais de la source au concasseur, ou au niveau du concasseur,
à l'exception de moyens de scalpage du déblai et de malaxage du remblai.

9. Installation selon la revendication 8, **caractérisée en ce qu'**elle comporte :
- un concasseur (12),
- un crible (14),
- des moyens de transport (11) des déblais de la source au concasseur,
- des moyens de transport (13) des déblais concassés du concasseur au crible,
- des moyens de transport (16) du résidu du crible en amont du concasseur.

10. Installation selon la revendication 8, **caractérisée en ce qu'**elle comporte :
- un concasseur primaire (22),
- un crible (24),
- un concasseur secondaire (27),
- des moyens de transport des déblais de la source au concasseur primaire (22),
- des moyens de transport (23) des déblais concassés du concasseur primaire au crible,
- des moyens de transport (26) du résidu du crible au concasseur secondaire,
- des moyens de transport (29) des déblais concassés du concasseur secondaire en amont du crible.

11. Remblai, **caractérisé en ce qu'**il est obtenu par le procédé selon l'une des revendications 1 à 7 et **en ce qu'**il présente :
- une capacité de densification Q3-Q4,
- une stabilité à l'eau définie par les valeurs IPI et ICBR, le rapport ICBR/IPI étant supérieur à 1 et l'indice IPI supérieur à 15.

## Patentansprüche

1. Verfahren zur Behandlung von Bodenaushub zum Erhalt einer Aufschüttung, **dadurch gekennzeichnet, dass** der zu behandelnde Aushub eine Zerkleinerung erfährt, gefolgt von einem Sieben, wobei die Zerkleinerung und das Sieben im Kreislauf erfolgen, und dadurch, dass dem aufgegebenen Aushub Kalk zugesetzt wird und Aufschüttmaterial gewonnen wird.

2. Verfahren nach Anspruch 1, **dadurch gekennzeichnet, dass** der aufgegebene Aushub nicht getrennt ist.

3. Verfahren nach Anspruch 1 oder 2, **dadurch gekennzeichnet, dass** der zu behandelnde Aushub eine Zerkleinerung und ein Sieben im Kreislauf erfährt, wobei der Siebrückstand vor die Zerkleinerung zurückgeführt wird.

4. Verfahren nach Anspruch 1 oder 2, **dadurch gekennzeichnet, dass** der zu behandelnde Aushub eine erste Zerkleinerung erfährt, dann ein Sieben, wobei der Siebrückstand vor die Siebung zurückgeführt wird und eine zweite Zerkleinerung erfährt.

5. Verfahren nach einem der Ansprüche 1, 2 oder 3, **dadurch gekennzeichnet, dass** der Kalk vor der Zerkleinerung oder während der Zerkleinerung zugeführt wird.

6. Verfahren nach einem der Ansprüche 1, 2 oder 4, **dadurch gekennzeichnet, dass** der Kalk vor der ersten Zerkleinerung oder während der ersten Zerkleinerung zugeführt wird.

7. Verfahren nach einem der Ansprüche 1 bis 6, **dadurch gekennzeichnet, dass** von 0,1 bis 10 Gew.-% Kalk bezogen auf den Aushub zugegeben werden, bevorzugt 0,8 bis 3 Gew.-% Kalk bezogen auf den Aushub.

8. Vorrichtung zur Behandlung von Bodenaushub zum Erhalt einer Aufschüttung aus einer Aushubquelle umfassend mindestens:
- einen Brecher,
- ein Sieb,
- Transportmittel für den Aushub von der Quelle zum Brecher,
- Transportmittel für den zerkleinerten Aushub vom Brecher zum Sieb,
- Transportmittel für den Siebrückstand zum Brecher,
- Mittel zum Verteilen (17, 30, 30') von Kalk im Aushub, die auf Höhe der Transportmittel für den Aushub von der Quelle zum Brecher oder auf Höhe des Brechers angeordnet sind,
ausgenommen Mittel zum Trennen des Aushubs und zur Vermischung des Aufschüttmaterials.

9. Vorrichtung nach Anspruch 8, **dadurch gekennzeichnet, dass** sie umfasst:
- einen Brecher (12),
- ein Sieb (14)
- Transportmittel (11) für den Aushub von der Quelle zum Brecher,
- Transportmittel (13) für den zerkleinerten Aushub vom Brecher zum Sieb,
- Transportmittel (16) für den Siebrückstand vor den Brecher.

10. Vorrichtung nach Anspruch 8, **dadurch gekennzeichnet, dass** sie umfasst:
- einen ersten Brecher (22),
- ein Sieb (24)
- einen zweiten Brecher (27),
- Transportmittel für den Aushub von der Quelle zum ersten Brecher (22),
- Transportmittel (23) für den zerkleinerten Aushub vom ersten Brecher zum Sieb,
- Transportmittel (26) für den Siebrückstand zum zweiten Brecher,
- Transportmittel (29) für den zerkleinerten Aushub vom zweiten Brecher vor das Sieb.

11. Aufschüttmaterial, **dadurch gekennzeichnet, dass** es durch das Verfahren nach einem der Ansprüche 1 bis 7 erhalten ist und dadurch, dass es aufweist:
- eine Verdichtungskapazität von Q3-Q4,
- eine Wasserstabilität definiert durch die Werte IPI und ICBR, wobei das Verhältnis ICBR/IPI größer ist als 1 und der Index IPI größer ist als 15.

## Claims

1. A method of treating spoil to produce filling material, the method being **characterized in that** the spoil for treatment is subjected to crushing followed by screening, the crushing and the screening processes being carried out in a loop, and **in that** lime is added to the incoming spoil, and filling material is recovered therefrom.

2. A method according to claim 1, **characterized in that** the incoming spoil is not scalped.

3. A method according to claim 1 or claim 2, **characterized in that** the spoil for treatment is subjected to crushing and screening in a loop, the residue of the screening being recycled upstream from the crushing.

4. A method according to claim 1 or claim 2, **characterized in that** the spoil for treatment is subjected to primary crushing, then screening, the residue of the screening being recycled upstream from the screening, being subjected to secondary crushing.

5. A method according to any one of claims 1, 2, or 3, **characterized in that** the lime is introduced upstream from the crushing or during the crushing.

6. A method according to any one of claims 1, 2, or 4, **characterized in that** the lime is introduced upstream from the primary crushing or during the primary crushing.

7. A method according to any one of claims 1 to 6, **characterized in that** lime is added at 0.1 % to 10% by weight relative to the spoil, and preferably 0.8% to 3% by weight of lime relative to the spoil.

8. An installation for treating spoil to produce filling material from a source of spoil, the installation comprising at least:
a crusher;
a screen;
means for transporting spoil from the source to the crusher;
means for transporting crushed spoil from the crusher to the screen;
means for transporting screen residue to the crusher; and
· means (17, 30, 30') for dispensing lime, into the spoil, said means being located at the means for transporting spoil from the source to the crusher or at the crusher;
with the exception of means for scalping the spoil and means for mixing the filling material.

9. An installation according to claim 8, **characterized in that** it comprises:
· a crusher (12);
· a screen (14);
· means (11) for transporting spoil from the source to the crusher;
· means (13) for transporting crushed spoil from the crusher to the screen; and
· means (16) for transporting the screen residue upstream of the crusher.

10. An installation according to claim 8, **characterized in that** it comprises:
· a primary crusher (22);
· a screen (24);
· a secondary crusher (27);
· means for transporting spoil from the source to the primary crusher (22);
· means (23) for transporting crushed spoil from the primary crusher to the screen;
· means (26) for transporting the screen residue to the secondary crusher; and
· means (29) for transporting the crushed spoil from the secondary crusher to upstream from the screen.

11. Filling material, **characterized in that** it is obtained by the method according to any one of claims 1 to 7, and **in that** it presents:
· densification capacity Q3-Q4; and
· water stability defined by the values IPI and ICBR where the ratio ICBR/IPI is greater than 1 and the index IPI is greater than 15.
